# EUROPÄISCHE PATENTSCHRIFT

(11) **EP 2 792 620 B1**
(45) Veröffentlichungstag und Bekanntmachung des Hinweises auf die Patenterteilung: **31.08.2016**
(21) Anmeldenummer: 14161028.7
(22) Anmeldetag: 21.03.2014
(51) Int. Cl.: B65G 19/02, B65G 47/61, B65G 9/00

(54) **Transporttasche zum hängenden Transport von Waren sowie Beladestation und Förderanlage für diese Transporttaschen**
Transport bag for the suspended transport of goods as well as the loading station and conveyor device for these transport bags
Sac de transport pour le transport suspendu de marchandises ainsi que la station de chargement et le dispositif de transport pour ces sacs

(30) Priorität: 22.03.2013 DE 102013205172
(43) Veröffentlichungstag der Anmeldung: 22.10.2014
(73) Patentinhaber: Dürkopp Fördertechnik GmbH, 33719 Bielefeld (DE)
(72) Erfinder: Wend, Michael, 33619 Bielefeld (DE); Janzen, Paul, 33619 Bielefeld (DE)
(74) Vertreter: Rau, Schneck & Hübner Patentanwälte Rechtsanwälte PartGmbB

(56) Entgegenhaltungen:
- EP-A1- 1 420 105
- EP-A2- 2 196 415
- DE-A1-102011 101 987

## Beschreibung

Die Erfindung betrifft eine Transporttasche zum hängenden Transport von Waren. Ferner betrifft die Erfindung eine Beladestation für derartige Transporttaschen sowie eine Förderanlage mit einer derartigen Beladestation.

Eine Transporttasche der eingangs genannten Art ist bekannt aus der EP 2 130 968 A1.

Ein gattungsgemäße Transporttasche ist aus der DE 10 2011 101 987 A1 bekannt. Eine Verschlussklappe kann über eine Handhabungslasche an einem Trägerteil der Transporttasche festgelegt sein.

Es ist eine Aufgabe der vorliegenden Erfindung, eine Transporttasche der eingangs genannten Art zum warenschonenden Transport weiterzubilden.

Diese Aufgabe ist erfindungsgemäß gelöst durch eine Transporttasche mit den im Anspruch 1 angegebenen Merkmalen.

Die flexible und erfindungsgemäß längenanpassbare Haltewand ermöglicht es, eine Taschenform an die zu transportierende Ware genau anzupassen, ohne dass es hierzu einer Elastizität der Haltewand zwingend bedarf. Mit einer solchen Transporttasche lassen sich beispielsweise Bekleidungswaren hängend ohne Knittergefahr transportieren. Es ist dabei nicht erforderlich, dass die Bekleidungswaren direkt mit dem Tragelement, beispielsweise über einen Hängebügel, verbunden sind. Auch andere Waren, beispielsweise Paketwaren oder Bücher sowie sonstiges Stückgut, lassen sich sicher transportieren. Bei dem Tragelement der Transporttasche kann es sich um einen Haken oder um eine sonstige Tragkupplung zur Verbindung mit einem tragenden Bauteil handeln. Die Tragwand kann zur Fixierung der Ware eine Anti-Rutsch-Beschichtung aufweisen. Die Transporttasche kann für eine manuelle und/oder für eine automatische Beladung ausgeführt sein.

Die Tragwand kann seitlich mit jeweils einer überstehenden Bordwand ausgerüstet sein, um ein seitliches Verrutschen der Waren über die Tragwand hinaus zu verhindern. Die flexible und längenanpassbare Haltewand weist ein Haltewand-Reservoir auf. Das Haltewand-Reservoir umfasst einen nicht erforderlichen Abschnitt der Haltewand. Der nicht erforderliche Abschnitt der Haltewand ist maximal, wenn die Tasche unbeladen ist, also keine Ware in der Transporttasche transportiert wird. Der nicht benötigte Haltewand-Abschnitt liegt auch dann vor, wenn eine Ware transportiert wird, deren Größe nicht die vollständige Haltewandgröße erfordert. Bei der Transporttasche wird lediglich der Anteil der Haltewand aus dem Haltewand-Reservoir zum Tragen und/oder Fixieren einer Ware verwendet, der aufgrund der Warengröße erforderlich ist. Der nicht erforderliche Anteil verbleibt in dem Haltewand-Reservoir. Eine Länge der bahnförmigen Haltewand zwischen dem oberen und dem unteren Wand-Verbindungsabschnitt ist variabel an den Transport verschiedener Waren anpassbar. Insbesondere bei dem Transport kleinerer Waren wird nur die Länge der bahnförmigen Haltewand dem Haltewand-Reservoir entnommen, die für den Transport der Ware erforderlich ist. Die Ware ist in der Transporttasche, insbesondere zwischen der Haltewand und der Tragwand geklemmt und dadurch fixiert. Die Ware befindet sich in der Transporttasche in einer stabilen Lage. Die Ware wird mit der Tasche stabil transportiert. Dadurch ist die Ware in der Transporttasche definiert und gesichert angeordnet. Ein unbeabsichtigtes und unkontrolliertes Verlagern der Ware in der Transporttasche ist ausgeschlossen. Der Transport mit der erfindungsgemäßen Transporttasche ist zuverlässig und sicher. Das Haltewand-Reservoir kann beispielsweise als Überstands-Abschnitt oder als Vorratsrolle ausgeführt sein. Das Entnehmen der Haltewand aus dem Haltewand-Reservoir ist insbesondere reversibel möglich. Das bedeutet, dass nach einem erfolgten Warentransport die nicht erforderliche Länge der Haltewand zurück in das Haltewand-Reservoir verlagert werden kann. Dadurch ist gewährleistet, dass eine vergleichsweise kleinere Ware zuverlässig transportiert werden kann, nachdem zuvor eine vergleichsweise größere mit der Transporttasche transportiert worden ist.

Eine konvexe Ausführung der Tragwand nach Anspruch 2 sorgt dafür, dass die flexible Haltewand unabhängig von einer Warenstärke die Waren gegen die Tragwand spannt. Die konvexe Ausführung der Tragwand kann durch eine konvexe Krümmung realisiert sein. Die Tragwand kann zwischen den beiden Wand-Verbindungsabschnitten einen konstanten Krümmungsradius oder auch in verschiedenen Abschnitten zwischen den Wand-Verbindungsabschnitten verschiedene Krümmungsradien aufweisen. Ein Krümmungsradius der Tragwand kann im Bereich zwischen 1m und 3m liegen. Der Krümmungsradius muss zwischen den beiden Wand-Verbindungsabschnitten nicht konstant sein, sondern kann beispielsweise hin zum unteren Wand-Verbindungsabschnitt oder auch hin zum oberen Wand-Verbindungsabschnitt zunehmen. Der Krümmungsradius kann auch in der Mitte zwischen beiden Wand-Verbindungsabschnitten am größten oder auch am kleinsten sein. Eine konvexe Ausführung der Tragwand kann alternativ zu einer konvexen Krümmung dadurch erreicht werden, dass diese nach Art eines Polygons aus einer Mehrzahl eben ausgeführter Tragwand-Abschnitte zusammengefügt ist. Es kann sich hierbei um beispielsweise fünf bis zwanzig polygonartig zusammengefügte Tragwand-Abschnitte handeln. Es ergibt sich eine konvex polygonale Ausführung der Tragwand.

Eine nicht elastische Haltewand nach Anspruch 3 kann aus standfestem Material für eine langlebige Transporttasche ausgeführt sein.

Eine Vorratsrolle nach Anspruch 4 führt zu einer kompakten Transporttasche.

Eine Federwelle nach Anspruch 5 erleichtert ein Aufrollen der Haltewand und kann zu einer spannenden Sicherung der Ware zwischen der Haltewand und der Tragwand genutzt werden.

Eine Bügelverbindung nach Anspruch 6 stellt eine herstellungstechnisch einfache Führung der Vorratsrolle dar. Das Bügelgelenk kann mittig zwischen den Wand-Verbindungsabschnitten angeordnet sein. Es können zu beiden Seiten der bahnförmigen Haltewand zwei symmetrisch angeordnete Bügel mit entsprechenden Bügelgelenken vorgesehen sein.

Eine Kupplung nach Anspruch 7 ermöglicht ein betriebssicheres Öffnen und Schließen der Transporttasche.

Eine Sperrklinken-Ausführung nach Anspruch 8 ist besonders für ein automatisches Öffnen bzw. Schließen der Transporttasche geeignet.

Eine Ausführung nach Anspruch 9 ist eine herstellungstechnische Vereinfachung.

Eine Beladestation nach Anspruch 10 ermöglicht ein einfaches Beladen der Transporttaschen während dem Transport durch die Beladestation. Der Beladeabschnitt kann als Beladetisch ausgeführt sein, der entweder für eine automatische Warenzuführung oder für eine Bedienperson zum manuellen Beladen zugänglich ist.

Die Vorteile einer Förderanlage nach Anspruch 11 entsprechen denen, die vorstehend unter Bezugnahme auf die Beladestation und die Transporttasche bereits erläutert wurden. Die Förderanlage kann einen Förderantrieb aufweisen.

Ausführungsbeispiele der Erfindung werden nachfolgend anhand der Zeichnungen erläutert. In dieser zeigen:
- Fig. 1: perspektivisch eine erste Ausführung eine Transporttasche zum hängenden Transport von Waren, wobei eine Kupplung zum lösbaren Verbinden einer Tragwand der Transporttasche mit einer bahnförmigen Waren-Haltewand der Transporttasche in einer Freigabestellung dargestellt ist;
- Fig. 2: die Transporttasche nach Fig. 1 mit der Kupplung in einer Sperrstellung, in der die Haltewand mit der Tragwand im Kupplungsbereich fest verbunden ist;
- Fig. 3: in einer zur Fig. 2 ähnlichen Darstellung die Transporttasche, bei der die Haltewand zum Transport einer kastenförmigen Ware längs ihrer Bahnform verlängert und damit ausgebaucht ist;
- Fig. 4: eine weitere Ausführung einer Transporttasche zum hängenden Transport von Waren, gezeigt in einer Schwenkposition einer Vorratsrolle für eine flexible Waren-Haltewand nahe einer Kupplungs-Endstellung, in der die Waren-Haltewand mit einer steifen Tragwand der Transporttasche verbindbar ist, wobei die Kupplung nahe einem oberen Taschenende, also nahe eines Tragelements zum hängenden Tragen der Transporttasche angeordnet ist;
- Fig. 5: in einer zu Fig. 4 ähnlichen Darstellung eine weitere Ausführung einer Transporttasche zum hängenden Transport von Waren, wobei bei dieser Ausführung eine Kupplung im Bereich eines dem Tragelement gegenüberliegenden Endes der Transporttasche angeordnet ist;
- Fig. 6: perspektivisch eine Beladestation zum Beladen der Transporttaschen mit Waren, dargestellt mit Transporttaschen der Ausführung nach Fig. 5;
- Fig. 7: ebenfalls perspektivisch eine Abgabestation zum Ausladen der Waren aus Transporttaschen der Ausführung nach Fig. 5; und
- Fig. 8: perspektivisch einen Ausschnitt der Abgabestation in einer Momentanposition einer der Transporttaschen vor dem Ausladen.

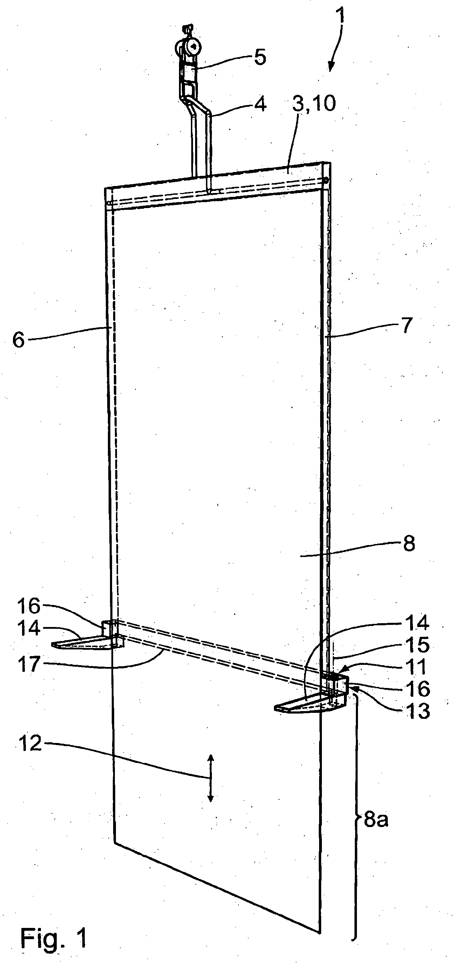

Anhand der Fig. 1 bis 3 wird eine erste Ausführung einer Transporttasche 1 zum hängenden Transport von Waren beschrieben. Bei den Waren kann es sich um Bekleidungsstücke, aber auch um andere und insbesondere feste Waren wie Bücher oder Pakete und insbesondere auch um kleinteilige Waren handeln.

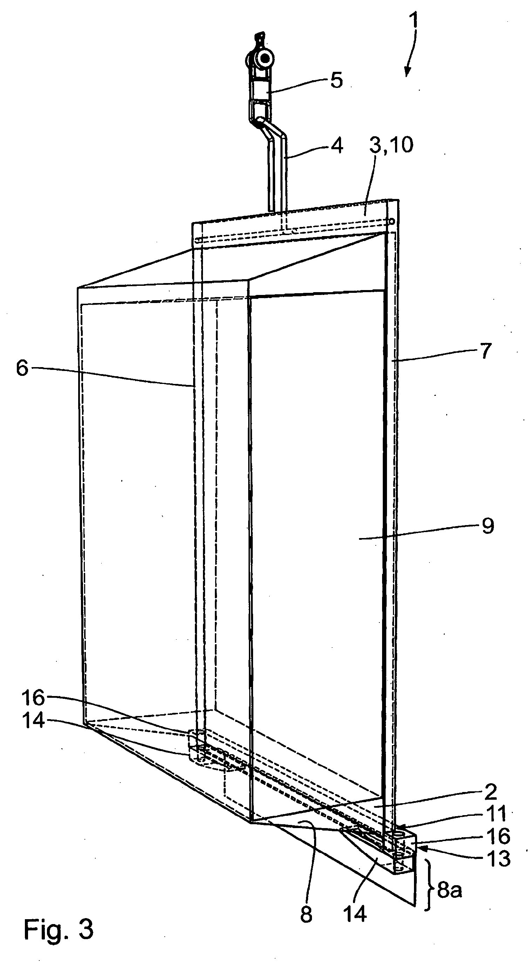

Die Transporttasche 1 hat eine steife Tragwand 2 (vgl. Fig. 3). Die steife Tragwand 2 ist in ihrem in Transportstellung oberen Abschnitt 3 mit einem Tragelement 4 zum hängenden Tragen der Transporttasche 1 verbunden. Bei der Ausführung nach Fig. 1 handelt es sich beim Tragelement 4 um einen Tragbügel, der in einem aus dem Stand der Technik bekannten Rollenadapter 5 eingreift, sodass die Transporttasche 1 über ein ebenfalls aus dem Stand der Technik bekanntes Führungsschienensystem einer Förderanlage geführt werden kann.

In der Transportstellung in den beiden seitlichen Randbereichen hat die Tragwand 2 zwei überstehende Bordwandabschnitte 6, 7.

Die Transporttasche 1 hat weiterhin eine flexible, bahnförmige Waren-Haltewand 8. Diese bildet mit der Tragwand 2 eine in der Transportstellung der Transporttasche 1 nach unten und zu zwei gegenüber liegenden Seiten hin geschlossene Tasche. Zu den beiden anderen Seiten hin kann diese Tasche offen sein, wie das Tragbeispiel nach Fig. 3 zeigt, in der die Transporttasche 1 ein Paket 9 trägt. Die Transporttasche 1 ist in der dargestellten Transportstellung zu den zwei gegenüber liegenden Seiten, nämlich einerseits zur Tragwand 2 und andererseits zur Waren-Haltewand 8 hin geschlossen und zu den anderen beiden Seiten hin offen. Die überstehenden Bordwandabschnitte 6, 7 sichern das Paket 9 gegen ein Verrutschen seitlich über die Bordwandabschnitte 6, 7 hinaus.

Die flexible Waren-Haltewand 8 ist aus einem nicht elastischen Material gefertigt, beispielsweise aus einem PE-Material mit einer PVC-Beschichtung.

Die Tragwand 2 ist mit der Haltewand 8 zwischen einem in der Transportstellung oberen Wand-Verbindungsabschnitt 10 und einem in der Transportstellung unteren Wand-Verbindungsabschnitt 11 derart verbunden, dass eine Länge der bahnförmigen Haltewand 8 in einer Bahnrichtung zwischen den beiden Wand-Verbindungsabschnitten 10, 11 an den Transport verschiedener Waren angepasst werden kann.

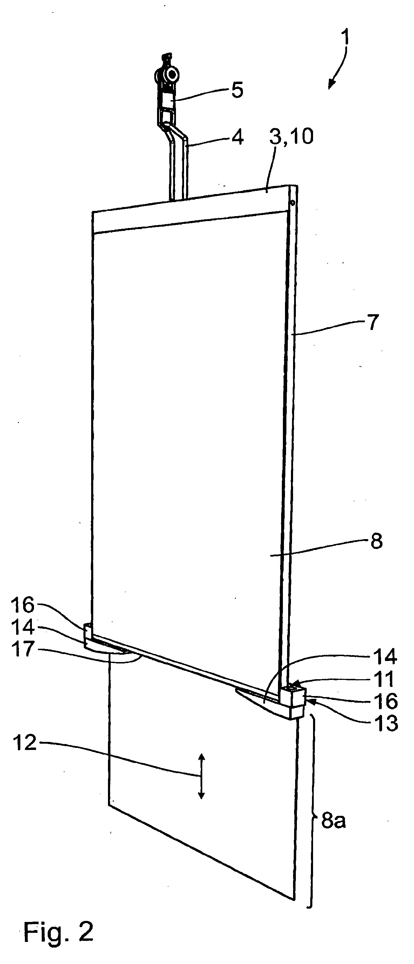

Die Fig. 1 und 2 zeigen dabei die Haltewand 8 in einer Grundstellung relativ zur Tragwand 2, bei die Haltewand 8 insgesamt flächig an der Tragwand 2 anliegt. In dieser Grundstellung steht ein Bahnabschnitt 8a der flexiblen Waren-Haltewand 8 über den unteren Wand-Verbindungsabschnitt 11 über.

Die Fig. 3 zeigt die Haltewand 8 mit der zwischen den beiden Wand-Verbindungsabschnitten 10, 11 zum Transport des Pakets 9 in ihrer Länge angepassten Haltewand 8. Der Überstand 8a der Haltewand 8 ist entsprechend verringert.

Eine Längenanpassung der Haltewand 8 erfolgt durch eine Relativverlagerung der Haltewand 8 längs der Bahnrichtung 12 zur Tragwand 2 im Bereich des unteren Verbindungsabschnitts 11.

Zur lösbaren Verbindung der Haltewand 8 mit der Tragwand 2 im unteren Wand-Verbindungsabschnitt 11 und insbesondere zur Fixierung der Längeneinstellung der Haltewand 8 im unteren Wand-Verbindungsabschnitt 11 dient eine Kupplung 13. Die Kupplung 13 ist im Bereich des unteren Wand-Verbindungsabschnitts 11 angeordnet. Die Kupplung 13 ist in der Fig. 1 in einer Freigabestellung gezeigt, in der eine Verlagerung der Haltewand 8 zur Tragwand 2 längs der Bahnrichtung 12 möglich ist, und in der Fig. 2 in einer Sperrstellung gezeigt, in der die Haltewand 8 relativ zur Tragwand 2 gegen eine Verlagerung längs der Bahnrichtung 12 fixiert ist und in der gleichzeitig die Tasche im unteren Wand-Verbindungsabschnitt 11 verschlossen ist.

Die Kupplung 13 hat zwei Klemmhebel 14, die jeweils um eine außenliegende, in der Transportstellung der Transporttasche 1 vertikale Schwenkachse 15 verlagerbar sind. Die Schwenkbewegung der Klemmhebel 14 erfolgt geführt jeweils über ein Schwenklagerteil 16 der Kupplung 13, welches außen an den Bordwandabschnitten 6, 7 der Tragwand 2 festgelegt ist. In der Freigabestellung nach Fig. 1 sind die beiden Klemmhebel 14 so verlagert, dass sie außer Eingriff mit der flexiblen Waren-Haltewand 8 stehen. In der Sperrstellung nach Fig. 2 sind die beiden Klemmhebel 14 jeweils um 90° um die zugehörige Schwenkachse 15 nach innen verschwenkt, sodass sie einen Abschnitt der Haltewand 8 gegen eine untere Rahmenleiste 17 der Tragwand 2 im unteren Wand-Verbindungsabschnitt 11 klemmen. Zwischen der Freigabestellung nach Fig. 1 und der Sperrstellung nach Fig. 2 können die beiden Klemmhebel manuell verschwenkt werden.

Beim Beladen wird die Ware zwischen die beiden Taschenwände 2, 8 eingebracht. Die flexible Waren-Haltewand 8 wird dabei längs der Balurichtung 12 so lange relativ zur Tragwand 2 verlagert, bis in der gebildeten Tasche ausreichend Platz für die Ware, beispielsweise für das Paket 9, vorliegt. Anschließend wird die flexible Waren-Haltewand 8 längs der Bahnrichtung 12 fest angezogen, bis die Ware in der Tasche fixiert ist und schließlich durch Verlagern der beiden Klemmhebel 14 von der Freigabein die Sperrstellung relativ zur Tragwand 2 fixiert ist. Die Tasche ist dann beladen und für den Transport der hierin fixierten Ware vorbereitet. Zur Warenabgabe werden die beiden Klemmhebel 14 gelöst und die flexible Waren-Haltewand kann durch Ziehen längs der Bahnrichtung 12 gelockert werden. Die Ware kann dann aus der Tasche entnommen werden.

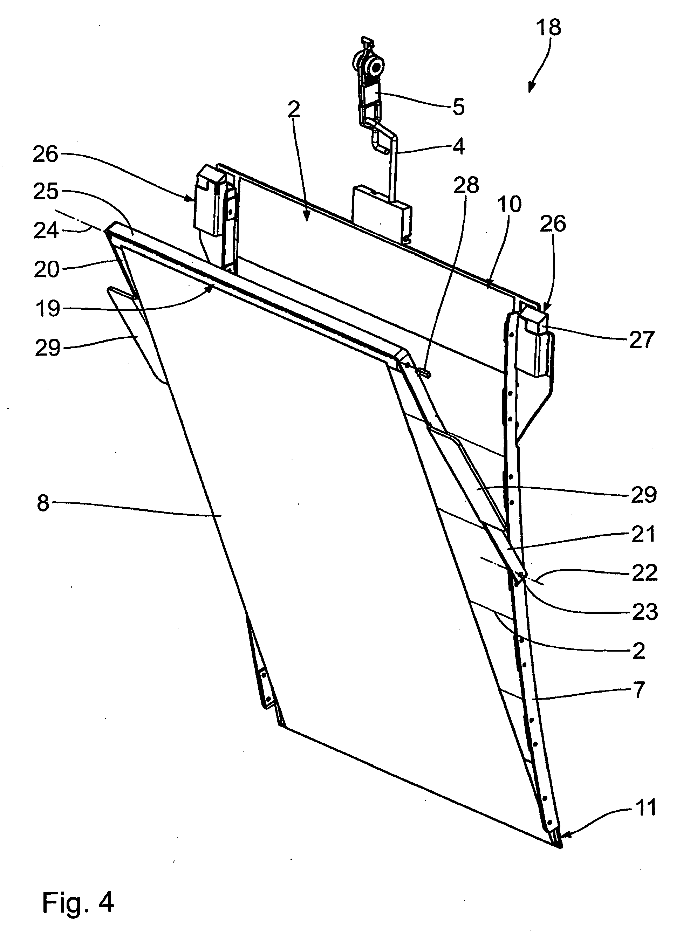

Anhand der Fig. 4 wird nachfolgend eine weitere Ausführung einer Transporttasche 18 zum hängenden Transport von Waren beschrieben. Komponenten und Funktionen, die denjenigen entsprechen, die vorstehend unter Bezugnahme auf die Fig. 1 bis 3 bereits erläutert wurden, tragen die gleichen Bezugsziffern und werden nicht nochmals im Einzelnen diskutiert.

Die Tragwand 2 hat einen Grundkörper aus einem steifen Material, der einteilig oder mehrteilig ausgeführt sein kann. Beim Material des Grundkörpers kann es sich um Kunststoff oder um Metall handeln. Die Tragwand 2 ist zur Warenauflage mit einer Anti-Rutsch-Beschichtung versehen. Diese Beschichtung kann PU und/oder Kautschuk beinhalten.

Bei der Transporttasche 18 ist die Tragwand 2 zur Tasche hin, also zur flexiblen Waren-Haltewand 8 hin, konvex gekrümmt. Ein Krümmungsradius der Tragwand 2 liegt im Bereich zwischen 1m und 3m. Alternativ zu einer konvex gekrümmten Gestaltung der Tragwand 2 kann eine konvexe Ausführung der Tragwand 2 auch dadurch erreicht werden, dass diese aus einer Mehrzahl eben verlaufender Tragwand-Abschnitte zwischen dem oberen, Wand-Verbindungsabschnitt 10 und dem unteren Wand-Verbindungsabschnitt 11 zusammengefügt ist, wobei jeweils zwei benachbarte der Tragwand-Abschnitte einen kleinen Winkel zueinander einnehmen, sodass ein Schnitt durch die Tragwand senkrecht zum Verlauf der beiden Verbindungsabschnitte 10, 11 polygonförmig ist. Die Tragwand 2 kann dabei aus beispielsweise fünf bis zwanzig derartiger Polygon-Tragwand-Abschnitte zusammengesetzt sein.

Bei der Transporttasche 18 liegt die flexible Waren-Haltewand 8 abschnittsweise auf einer Vorratsrolle 19 aufgerollt vor. Auf der Vorratsrolle 19 aufgerollt ist dabei je nach Stellung der Vorratsrolle 19 die gesamte Waren-Haltewand oder aber auch nur derjenige Abschnitt der Waren-Haltewand 8, der bei der Ausführung nach den Fig. 1 bis 3 im Bereich des Überstandes 8a vorliegt.

Die Vorratsrolle 19 ist als Federwelle ausgeführt, die die nicht aufgerollte Haltewand 8 zwischen der Vorratsrolle 19 und dem unteren Wand-Verbindungsabschnitt 11 unter Spannung hält. Die Haltewand 8 kann automatisch variabel an die Größe verschiedener Waren angepasst werden. Dadurch ist gewährleistet, dass sich die flexible Haltewand 8 automatisch variabel an verschiedene Warengrößen anpasst. Insbesondere ist ein manuelles Eingreifen beispielsweise eines Bedieners nicht erforderlich, um die Haltewand 8 variabel festzulegen, falls verschiedene Warengrößen mit der Transporttasche 18 transportiert werden sollen.

Die Transporttasche 18 hat zwei schwenkbare Bügel 20, 21. Die Bügel 20, 21 sind jeweils um eine in der Transportstellung der Transporttasche 18 horizontal in der Ebene der Tragwand 2 verlaufende Schwenkachse 22 um ein Schwenkgelenk 23 verschwenkbar. Die Schwenkachse 22 ist mittig zwischen dem oberen Wand-Verbindungsabschnitt 10 und dem unteren Wand-Verbindungsabschnitt 11 angeordnet. Die Schwenkgelenke 23 für die Bügel 20, 21 sind an den seitlichen Bordwandabschnitten 6, 7 der Tragwand 2 festgelegt. Die beiden Schwenkgelenke 23 liegen also zu beiden Seiten der bahnförmigen Haltewand 8.

Die dem Schwenkgelenk 23 jeweils gegenüberliegenden Enden der Bügel 20, 21 sind mit der Vorratsrolle 19 verbunden und nehmen diese drehbar um eine ebenfalls horizontale Rollenachse 24, die parallel zur Schwenkachse 22 verläuft, zwischen sich auf. Zur Stabilisierung ist zwischen den Bügeln 20, 21 noch eine Rahmenleiste 25 angeordnet, die benachbart zur Vorratsrolle 19 verläuft.

Anstelle der Kupplung 13 hat die Transporttasche 18 eine weitere Ausführung einer Kupplung 26 zum lösbaren Verbinden der Haltewand 8 mit der Tragwand 2, in diesem Fall im oberen Wand-Verbindungsabschnitt 10. Zur Kupplung 26 gehört ein Kupplungsteil in Form einer Sperrklinke 27, die im Bereich des oberen Wand-Verbindungsabschnitts 10 rahmenfest zur Tragwand 2 gelagert ist. Als Gegen-Kupplungsteil hat die Kupplung 26 jeweils einen Kupplungsstift 28, der außen am jeweiligen Bügel 20, 21 benachbart zur Rollenachse 24 angeordnet ist. Die Kupplung 26 weist zwei Paare aus einer Sperrklinke 27 und einem Kupplungsstift 28 auf, die jeweils beiderseits der Bordwandabschnitte 6, 7 angeordnet sind.

Die Kupplungsstifte 28 stellen Kupplungselemente der Kupplung 26 dar, die starr mit der Verbindungsrolle 19 verbunden sind.

Zum Beladen der Transporttasche 18 mit einer Ware oder einer Mehrzahl von Waren liegt die Vorratsrolle 19 zunächst in einer Offenstellung der Transporttasche 18 unmittelbar neben dem unteren Wand-Verbindungsabschnitt 11. In dieser Offenstellung ist die Vorratsrolle 19 aufgrund der Vorspannung der Federwelle gehalten. In der Offenstellung ist praktisch die gesamte Haltewand 8 auf die Vorratsrolle 19 aufgerollt. Zum Beladen liegt die Transporttasche 18 so, dass die Tragwand 2 mit ihrer konvexen Oberseite nach oben weist. Die Ware kann nun einfach auf die Tragwand 2 aufgelegt werden. Nun werden die Schwenkbügel 20, 21 an Betätigungsgriffen 29, die an diesen angeformt sind, ergriffen und die Vorratsrolle 19 wird um die Schwenkachse 22 aus der Offenstellung über die in der Fig. 4 gezeigten Stellung in eine Schließstellung verbracht, in der die Kupplung 26 in der Sperrstellung vorliegt. Hierbei rollt sich die flexible Waren-Haltewand 8 von der Vorratsrolle 19 im benötigten Maß ab, wobei die Haltewand 8 aufgrund der Vorspannung der Federwelle und aufgrund der konvexen Formgebung der Tragwand 2 an der Ware anliegt und diese in der Tasche fixiert. Beim Einrasten in die Schließstellung überwinden die beiden Kupplungsstifte 28 eine Vorspannkraft der ihnen zugeordneten Sperrklinken 27. Auf der Vorratsrolle 19 bleibt in der Schließstellung der Überstand 8a der Haltewand 8 aufgerollt.

Zum Entladen der Transporttasche 18 werden die beiden Sperrklinken 27 entgegen ihrer Vorspannkraft in ihre jeweilige Freigabestellung verlagert, sodass die Sperrklinken 27 die Kupplungsstifte 28 freigeben. Unterstützt durch die Vorspannkraft der Federwelle der Vorratsrolle 19 schwenken die Bügel 20, 21 zurück in die Offenstellung, sodass die Ware aus der Tasche freigegeben wird.

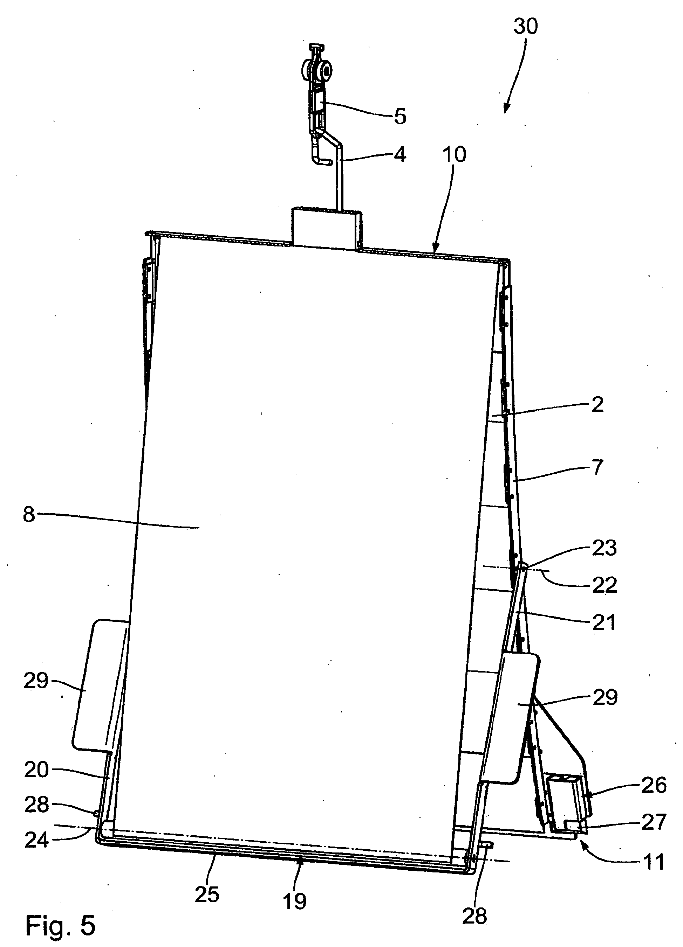

Anhand der Fig. 5 wird nachfolgend eine weitere Ausführung einer Transporttasche 30 beschrieben, die anstelle der Transporttasche 1 und 18 zum hängenden Transport von Waren zum Einsatz kommen kann. Komponenten und Funktionen, die denjenigen entsprechen, die vorstehend unter Bezugnahme auf die Fig. 1 bis 3 und insbesondere unter Bezugnahme auf die Fig. 4 bereits erläutert wurden, tragen die gleichen Bezugsziffern und werden nicht nochmals im Einzelnen diskutiert.

Im Unterschied zur Transporttasche 18 ist bei der Transporttasche 30 die Kupplung 26 im unteren Wand-Verbindungsabschnitt 11 angeordnet. In der Offenstellung der Transporttasche 30 liegt die Vorratsrolle 19, gehalten über die Federkraft der Federwelle, im Bereich des oberen Wand-Verbindungsabschutts 10. Zum Beladen der Transporttasche 30 wird diese wiederum so aufgelegt, dass die konvexe Seite der Tragwand 2 nach oben weist. Die Ware wird, wie vorstehend im Zusammenhang mit der Transporttasche 18 bereits beschrieben, auf die Tragwand aufgelegt und die Bügel 20, 21 werden aus der Offenstellung in die Schließstellung verbracht, wobei die Kupplungsstifte 28 mit den Sperrklinken 27 verrasten. Zum Entladen der Transporttasche werden die Sperrklinken 27 in die Freigabestellung überführt, sodass die Kupplung 26 die Kupplungsstifte 28 freigibt und die Bügel 20, 21, unterstützt durch die Vorspannung der Federwelle der Vorratsrolle 19 wieder zurück in die Offenstellung um die Schwenkachse 22 verschwenkt werden. Sobald das Öffnen der Kupplung 26 in der hängenden Transportstellung der Transporttasche 30 erfolgt, entlädt sich die Ware unter Schwerkrafteinfluss aus der Transporttasche 30.

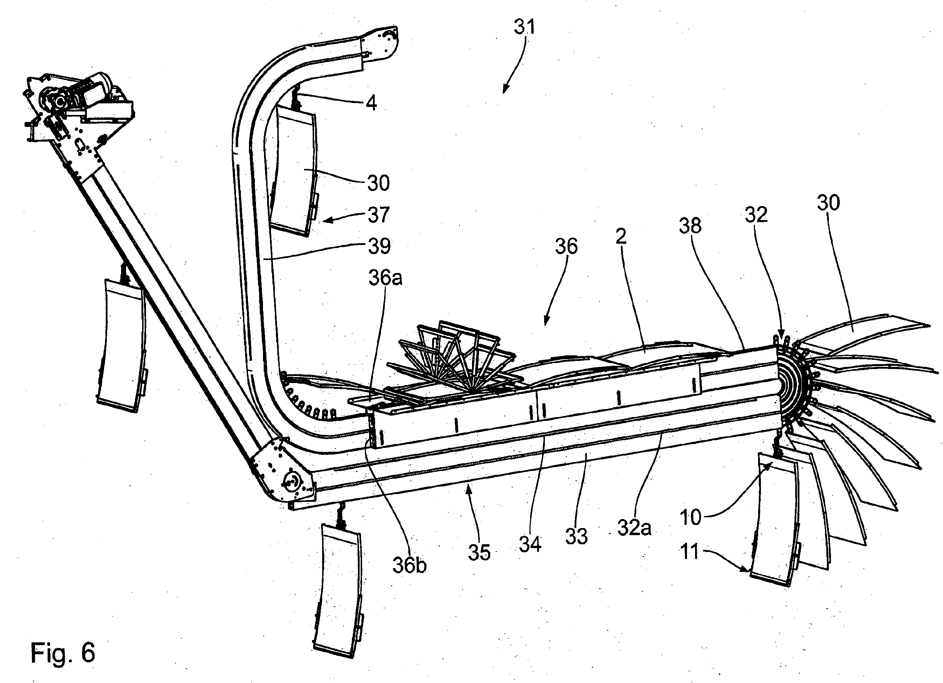

Fig. 6 zeigt perspektivisch eine Beladestation 31 für die Transporttaschen 30. Die Beladestation hat ein Fördertrum 32 zum Fördern der Transporttaschen 30. Das Fördertrum 32 gibt eine Förderrichtung der Transporttaschen 30 vor. Das Fördertrum 32 umfasst eine Förderschiene 33, in der eine angetriebene Förderkette 34 geführt ist. Das Fördertrum 32 der Beladestation 31 fördert die Transporttaschen 30 durch mehrere Stationsabschnitte, nämlich einen Zuführabschnitt 35, einen Beladeabschnitt 36 und einen Abführabschnitt 37. Längs dem Zuführabschnitt 35 werden die unbeladenen Transporttaschen 30 relativ zu einem Abschnitt 32a des Fördertrums 32 hängend zugeführt. Die unbeladenen Transporttaschen 30 hängen in Folge des Eigengewichts senkrecht nach unten. Das bedeutet, dass die Tragwand 2 und die Haltewand 8 quer zur Förderrichtung orientiert sind. Längs des Zuführabschnitts 35 ist die Förderrichtung der Transporttaschen 30 horizontal orientiert. Das bedeutet, dass die Tragwand 2 und die Haltewand 8 jeweils senkrecht zur Förderrichtung orientiert sind. Im Beladeabschnitt 36 werden die Transporttaschen 30 auf einem weiteren Abschnitt 38 des Fördertrums liegend gefördert. Bei der liegenden Förderung sind die Tragwand 2 und die Haltewand 8 im Wesentlichen parallel zu der horizontalen Förderrichtung orientiert. Die Transporttasche 30 liegt mit der Tragwand 2 auf dem Fördertrum 32 des Beladeabschnitts 36 auf. Die Förderrichtung kann längs des Beladeabschnitts 36 auch gegenüber der Horizontalen geneigt sein. Während der liegenden Förderung der Transporttaschen 30 befinden sich die Transporttaschen 30 in einer räumlich definierten Position. Gemäß dem gezeigten Ausführungsbeispiel liegt die Transporttasche an mindestens drei Punkten im Beladeabschnitt 36 des Fördertrums 32 auf. Ein Schwenken der Transporttasche 30 mit dem Tragelement 4 an dem Rollenadapter 5 ist verhindert. Es ist auch denkbar, dass die Transporttasche 30 beispielsweise durch eine Arretierung der Tragelemente 4 in einer gewünschten Liegeposition arretiert gefördert werden kann.

Längs dem Abführabschnitt 37 der Beladestation 31 werden die beladenen Transporttaschen 30 relativ zu einem weiteren Abschnitt 39 des Fördertrums hängend abgeführt.

Zwischen dem Zuführabschnitt 35 und dem Beladeabschnitt 36 wird das Fördertrum 32 um 180° umgelenkt, sodass die Tragelemente 4 der Transporttaschen, die im Zuführabschnitt 35 unter dem Fördertrum 32 angeordnet waren, nun auf dem Fördertrum 32 zu liegen kommen. Im Abführabschnitt 37 erfolgt wiederum eine 180°-Umlenkung des Fördertrums, sodass die Tragelemente 4 der Transporttaschen 30 wieder unterhalb des Fördertrums 32 angeordnet sind.

Der Beladeabschnitt 36 ist als Beladetisch 36a ausgeführt, der eine Längsnut 36b zum Durchtritt der Tragelemente hin zum Fördertrum 2 aufweist.

Die Transporttaschen 30 werden dem Beladeabschnitt 36 geöffnet zugeführt, also mit auf den jeweiligen Vorratsrollen 19 aufgerollter Haltewand 8. Im Beladeabschnitt 36 liegen die Transporttaschen 30 dann beladefertig mit der konvexen Seite der Tragwand 2 nach oben. Nach dem Beladen werden die Transporttaschen 30 durch Überführung der Schwenkbügel 20, 21 in die Schließstellung geschlossen. Dies kann manuell oder über entsprechende Betätigungselemente auch automatisch in dem Beladeabschnitt 36 der Beladestation 31 erfolgen. Nach dem Schließen der Transporttaschen 30 im Beladeabschnitt 36 werden die verschlossenen Transporttaschen 30 über den Abführabschnitt 37 aus der Beladestation 31 abgeführt.

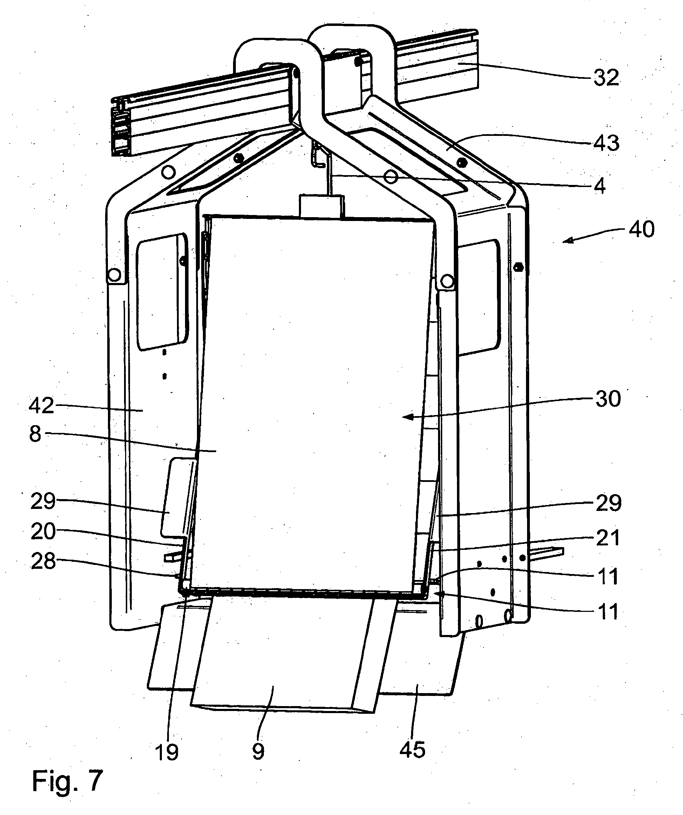

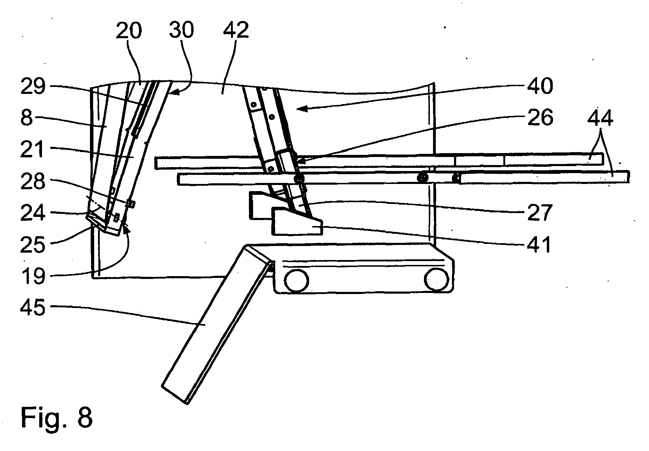

Anhand der Fig. 7 und 8 wird eine Entladestation 40 als weitere Komponente einer Förderanlage für die Transporttaschen 30 beschrieben. Komponenten und Funktionen, die vorstehend unter Bezugnahme auf die Fig. 1 bis 6 bereits erläutert wurden, tragen die gleichen Bezugsziffern und werden nicht nochmals im Einzelnen diskutiert.

Die Entladestation 40 hat Freigabemittel in Form von Schaltkufen oder, wie in der Fig. 8 dargestellt, Schaltkeilen 41, die von Seitenwänden 42 getragen werden, die wiederum über Tragbügel 43 am Fördertrum festgelegt sind. Die Schaltkeile 41 wirken mit den Sperrklinken 27 zum Öffnen der Kupplungen 26 zusammen. Beim Fördern der Transporttaschen 30 durch die Entladestation 40 laufen Sperrklinken 27 auf die Schaltkeile 41 auf und werden hierüber in die Freigabestellung verlagert. Hierdurch kommen die Kupplungsstifte 28 frei und die Transporttasche 30 öffnet sich zum Abgeben der Ware (Paket 9).

Um sicherzustellen, dass die Sperrklinken 27 in gewünschter Weise von den Schaltkeilen 41 betätigt werden, ist eine Bewegung der jeweiligen Transporttasche 30 in der Entladestation 20 im Bereich der Schaltkeile 41 über zwei Führungsschienen 44 geführt, die beiderseits eines Förderweges der Transporttasche 30 durch die Entladestation 40 jeweils innen an den Seitenwänden 42 angebracht sind.

Eine Führungsplatte 45 dient zur Führung einer Fallrichtung der aus der jeweiligen Transporttasche 30 abgegebenen Ware (Paket 9).

Die Beladestation 31 nach Fig. 6 und die Entladestation 40 nach den Fig. 7 und 8 kann mit geringfügigen Modifikationen genauso für die Transporttaschen 1 und/oder 18 eingesetzt werden.

## Patentansprüche

1. Transporttasche (1; 18; 30) zum hängenden Transport von Waren (9)
- mit einer Tragwand (2), die in ihrem in Transportstellung oberen Abschnitt (3) mit einem Tragelement (4) zum hängenden Tragen der Transporttasche (1; 18; 30) verbunden ist,
- mit einer flexiblen Waren-Haltewand (8), die mit der Tragwand (2) eine zumindest in der Transportstellung der Transporttasche (1; 18; 30) nach unten und zu zwei gegenüber liegenden Seiten hin geschlossene Tragtasche bildet,
- wobei die Tragwand (2) mit der Haltewand (8) zwischen einem in der Transportstellung oberen Wand-Verbindungsabschnitt (10) und einem in der Transportstellung unteren Wand-Verbindungsabschnitt (11) derart verbunden ist, dass eine Länge der bahnförmigen Haltewand (8) zwischen den beiden Wand-Verbindungsabschnitten (10, 11) variabel an den Transport verschiedener Waren (9) angepasst werden kann,
**dadurch gekennzeichnet, dass**
- die für den Transport der Ware (9) benötigte Länge der bahnförmigen Haltewand (8) einem Haltewand-Reservoir (8a; 19) entnehmbar ist und ein nicht benötigter Abschnitt der Haltewand (8) in dem Haltewand-Reservoir (8a; 19) verbleibt,
- die Ausführung der Transporttasche (1; 18; 30) derart ist, dass diese Längenanpassung der Haltewand (8) durch eine Relativverlagerung der Haltewand (8) zur Tragwand (2) zumindest im Bereich eines der beiden Verbindungsabschnitte (10, 11) erfolgt,
- die Tragwand (2) steif ausgeführt ist.

2. Transporttasche nach Anspruch 1, **dadurch gekennzeichnet, dass** die Tragwand (2) zur Haltewand (8) hin zwischen den beiden Wand-Verbindungsabschnitten (10, 11) konvex ausgeführt ist.

3. Transporttasche nach Anspruch 1 oder zwei, **dadurch gekennzeichnet, dass** die Haltewand (8) aus einem nicht elastischen Material gefertigt ist.

4. Transporttasche nach einem der Ansprüche 1 bis 3, **dadurch gekennzeichnet, dass** die Haltewand (8) abschnittsweise auf einer Vorratsrolle (19) aufgerollt vorliegt.

5. Transporttasche nach Anspruch 4, **dadurch gekennzeichnet, dass** die Vorratsrolle (1) eine Federwelle aufweist.

6. Transporttasche nach Anspruch 4 oder 5, **gekennzeichnet durch** mindestens einen um ein Gelenk (23), das mit der Tragwand (2) verbunden ist, schwenkbaren Bügel (20, 21), mit dessen dem Gelenk (23) gegenüber liegenden Ende die Vorratsrolle (19) verbunden ist.

7. Transporttasche nach einem der Ansprüche 1 bis 6, **gekennzeichnet durch** eine Kupplung (13; 26) zum lösbaren Verbinden der Haltewand (8) mit der Tragwand (2) im oberen Wand-Verbindungsabschnitt (10) und/oder im unteren Wand-Verbindungsabschnitt (11).

8. Transporttasche nach Anspruch 7, **dadurch gekennzeichnet, dass** die Kupplung (26) eine Sperrklinke (27) aufweist, die über ein Betätigungselement (41) entgegen einer Vorspannkraft zwischen einer Sperrstellung und einer Freigabestellung verlagerbar ist.

9. Transporttasche nach Anspruch 7 oder 8, **dadurch gekennzeichnet, dass** ein Kupplungselement (28) der Kupplung (26) starr mit einer Vorratsrolle (19) verbunden ist.

10. Beladestation (31) für Transporttaschen (30) nach einem der Ansprüche 1 bis 9
- mit mindestens einem Fördertrum (32) zum Fördern der Transporttaschen (30) und mit folgenden Stationsabschnitten:
- einem Zuführabschnitt (35), längst dem die unbeladenen Transporttaschen (30) relativ zu einem Abschnitt des Fördertrums (32) hängend zugeführt werden,
- einem Beladeabschnitt (36), längs dem die Transporttaschen (30) auf einem weiteren Abschnitt (38) des Fördertrums (32) liegend gefördert werden,
- einem Abführabschnitt (37), längs dem die beladenen Transporttaschen (30) relativ zu einem weiteren Abschnitt (39) des Fördertrums (32) hängend abgeführt werden.

11. Förderanlage
- mit mindestens einer Beladestation (31) nach Anspruch 10,
- mit mindestens einer Entladestation (40) zum Entladen der Waren (9) aus den Transporttaschen (30).

## Claims

1. Transport bag (1; 18; 30) for transporting products (9) in a hanging manner,
- comprising a carrying wall (2) a portion (3) of which facing upwards when in the transport position is connected to a carrying element (4) for carrying the transport bag (1; 18; 30) in a hanging manner,
- comprising a flexible product retaining wall (8) which, together with the carrying wall (2), forms a carrying bag that is closed downwards and towards two opposite sides at least in the transport position of the transport bag (1; 18; 30),
- wherein the carrying wall (2) is connected to the retaining wall (8) between a wall connecting portion (10) facing upwards when in the transport position and a wall connecting portion (11) facing downwards when in the transport position in such a way that a length of the web-shaped retaining wall (8) is variably adjustable to the transport of different products (9),
**characterized in that**
- the length of the web-shaped retaining wall (8) required for the transport of the products (9) is removable from a retaining wall reservoir (8a; 19) and a non-required portion of the retaining wall (8) remains in the retaining wall reservoir (8a; 19),
- the transport bag (1; 18; 30) is provided such that this length adjustment of the retaining wall (8) is performed by a relative displacement of the retaining wall (8) relative to the carrying wall (2) at least in the region of one of the two connecting portions (10, 11)
- the carrying wall (2) is rigid.

2. Transport bag according to claim 1, **characterized in that** the carrying wall (2) has a convex shape towards the retaining wall (8) between the two wall connecting portions (10, 11).

3. Transport bag according to claim 1 or two, **characterized in that** the retaining wall (8) is made of a non-elastic material.

4. Transport bag according to one of claims 1 to 3, **characterized in that** portions of the retaining wall (8) are wound up on a supply roll (19).

5. Transport bag according to claim 4, **characterized in that** the supply roll (1) is provided with a spring shaft.

6. Transport bag according to claim 4 or 5, **characterized by** at least one bracket (20, 21) which is pivotable about a joint (23) connected to the carrying wall (2), wherein the supply roll (19) is connected to the end of the bracket which is opposite to the joint (23).

7. Transport bag according to one of claims 1 to 6, **characterized by** a coupling (13; 26) for detachably connecting the retaining wall (8) to the carrying wall (2) in the upper wall connecting portion (10) and/or in the lower wall connecting portion (11).

8. Transport bag according to claim 7, **characterized in that** the coupling (26) is provided with a ratchet (27) which is displaceable, by means of an actuation member (41), in a direction opposite to a preloading force between a locked position and a release position.

9. Transport bag according to claim 7 or 8, **characterized in that** a coupling member (28) of the coupling (26) is rigidly connected to the supply roll (19).

10. Loading station (31) for transport bags (30) according to one of claims 1 to 9,
- comprising at least one conveyor run (32) for conveying the transport bags (30) and comprising the following station sections:
- an inlet section (35) along which the unloaded transport bags (30) are supplied, wherein the transport bags (30) are hanging relative to a section of the conveyor run (32);
- a loading section (36) along which the transport bags (30) are conveyed horizontally to another section (38) of the conveyor run (32);
- a discharge section (37) along which the loaded transport bags (30) are discharged, wherein the transport bags (30) are hanging relative to another section (39) of the conveyor run (32).

11. Conveyor system comprising
- at least one loading station (31) according to claim 10;
- at least one unloading station (40) for unloading the products (9) from the transport bags (30).

## Revendications

1. Sac de transport (1 ; 18 ; 30) pour le transport suspendu de marchandises (9)
- comprenant une paroi portante (2), qui est reliée dans sa partie (3) supérieure dans la position de transport à un élément portant (4) servant à porter de manière suspendue le sac de transport (1 ; 18 ; 30),
- une paroi de retenue (8) flexible de marchandises, qui forme avec la paroi portante (2) un sac de transport fermé vers le bas et en direction de deux faces opposées au moins dans la position de transport du sac de transport (1 ; 18 ; 30),
- la paroi portante (2) étant reliée à la paroi de retenue (8) entre une partie de liaison (10) de paroi supérieure dans la position de transport et une partie de liaison (11) de paroi inférieure dans la position de transport, de telle manière qu'une longueur de la paroi de retenue (8) en forme de bande entre les deux parties de liaison (10, 11) de paroi peut être adaptée de manière variable au transport de différentes marchandises (9), **caractérisé en ce que**
- la longueur de la paroi de retenue (8) en forme de bande nécessaire au transport de la marchandise (9) peut être retirée d'un réservoir (8a ; 19) de paroi de retenue et une partie non nécessaire de la paroi de retenue (8) reste dans le réservoir (8a ; 19) de paroi de retenue,
- la conception du sac de transport (1 ; 18 ; 30) est telle que cette adaptation de la longueur de la paroi de retenue (8) est mise en oeuvre par un déplacement relatif de la paroi de retenue (8) en direction de la paroi de retenue (2) au moins dans la zone d'une des deux parties de liaison (10, 11),
- la paroi portante (2) est rigide.

2. Sac de transport selon la revendication 1, **caractérisé en ce que** la paroi portante (2) est conçue de manière convexe en direction de la paroi de retenue (8) entre les deux parties de liaison (10, 11) de paroi.

3. Sac de transport selon la revendication 1 ou 2, **caractérisé en ce que** la paroi de retenue (8) est faite d'un matériau non élastique.

4. Sac de transport selon l'une quelconque des revendications précédentes 1 à 3, **caractérisé en ce que** la paroi de retenue (8) est présente en étant enroulée sur certaines parties sur un rouleau de réserve (19).

5. Sac de transport selon la revendication 4, **caractérisé en ce que** le rouleau de réserve (1) comprend un arbre à ressort.

6. Sac de transport selon la revendication 4 ou 5, **caractérisé par** au moins un étrier (20, 21) pouvant pivoter autour d'une articulation (23), qui est reliée à la paroi portante (2), l'extrémité de l'étrier opposée à l'articulation (23) étant reliée au rouleau de réserve (19).

7. Sac de transport selon l'une quelconque des revendications précédentes 1 à 6, **caractérisé par** un accouplement (13 ; 26) permettant de relier de manière détachable la paroi de retenue (8) à la paroi portante (2) dans la partie de liaison (10) de paroi supérieure et/ou dans la partie de liaison (11) de paroi inférieure.

8. Sac de transport selon la revendication 7, **caractérisé en ce que** l'accouplement (26) comprend un cliquet d'arrêt (27) qui peut être déplacé par un élément d'actionnement (41) à l'encontre d'une force de précontrainte entre une position de verrouillage et une position de libération.

9. Sac de transport selon la revendication 7 ou 8, **caractérisé en ce qu'**un élément d'accouplement (28) de l'accouplement (26) est relié de manière rigide à un rouleau de réserve (19).

10. Station de chargement (31) pour sacs de transport (30) selon l'une quelconque des revendications précédentes 1 à 9
- comprenant au moins un brin de transport (32) destiné à transporter les sacs de transport (30) et comprenant les parties de station suivantes :
- une partie d'amenée (35), le long de laquelle les sacs de transport (30) non chargés sont amenés de manière suspendue par rapport à une partie du brin de transport (32),
- une partie de chargement (36), le long de laquelle les sacs de transport (30) sont transportés en position couchée sur une autre partie (38) du brin de transport (32),
- une partie d'évacuation (37), le long de laquelle les sacs de transport (30) chargés sont évacués de manière suspendue par rapport à une autre partie (39) du brin de transport (32).

11. Installation de transport
- comprenant au moins une station de chargement (31) selon la revendication 10,
- au moins une station de déchargement (40) permettant de décharger les marchandises (9) des sacs de transport (30).
